# EUROPÄISCHE PATENTSCHRIFT

(11) **EP 3 491 269 B1**
(45) Veröffentlichungstag und Bekanntmachung des Hinweises auf die Patenterteilung: **14.09.2022**
(21) Anmeldenummer: 17771389.8
(22) Anmeldetag: 14.09.2017
(51) Int. Cl.: F16G 13/18, B30B 5/04, B30B 5/06, F16G 13/06

(54) **ROLLSTABKETTE UND KONTINUIERLICHE PRESSE**
ROLLBAR CHAIN AND CONTINUOUS PRESS
CHAÎNE DE BARRES ROTATIVES ET PRESSE CONTINUE

(30) Priorität: 19.10.2016 DE 202016105851 U
(43) Veröffentlichungstag der Anmeldung: 05.06.2019
(73) Patentinhaber: Siempelkamp Maschinen- und Anlagenbau GmbH, 47803 Krefeld (DE)
(72) Erfinder: FECHNER, Hans, 40489 Düsseldorf (DE); SCHÖLER, Michael, 47509 Rheurdt (DE); SEBASTIAN, Lothar, 47239 Duisburg (DE)
(74) Vertreter: Andrejewski - Honke Patent- und Rechtsanwälte Partnerschaft mbB
(86) Internationale Anmeldenummer: PCT/EP2017/073176
(87) Internationale Veröffentlichungsnummer: WO 2018/072937

(56) Entgegenhaltungen:
- DE-A1- 3 432 548
- US-A- 3 643 517
- US-A- 4 613 293
- US-A- 5 785 166

## Beschreibung

Die Erfindung betrifft eine Rollstabkette für eine kontinuierliche Presse, insbesondere zur Herstellung von Holzwerkstoffplatten, Verbundplatten, Verbundbauteilen oder dergleichen,
wobei die Rollstabkette als Laschenkette ausgebildet ist, an der Rollstäbe mittels Rollstablagerbolzen befestigbar (bzw. lagerbar) sind,
wobei die Laschenkette mittels Kettenbolzen verbundene Kettenlaschen aufweist,
wobei die Kettenlaschen in Kettenumlaufrichtung verlaufende Langlöcher aufweisen, in welchen die Rollstablagerbolzen (vorzugsweise mit Ausgleichsspiel in Kettenumlaufrichtung) einsteckbar (bzw. lagerbar) sind.

Eine solche Rollstabkette ist folglich Gegenstand einer kontinuierlich arbeitenden Presse. Die kontinuierlich arbeitende Presse weist im Pressenoberteil eine obere beheizbare Pressenplatte (obere Heizplatte) und im Pressenunterteil eine untere beheizbare Pressenplatte (untere Heizplatte) sowie gegebenenfalls einlaufseitig vorkragende beheizbaren Einlaufplatten auf. Im Pressenoberteil und im Pressenunterteil sind endlos umlaufende Pressbänder, z. B. Stahlpressbänder geführt, welche unter Zwischenschaltung von Rollstäben gegen die Pressenplatten/Heizplatten (oder Einlaufplatten) abgestützt sind. Die Rollstäbe weisen endseitig Rollstablagerbolzen auf, die an den Rollstabketten bzw. Laschenketten geführt sind, so dass die Rollstäbe mit Hilfe der beidseitig angeschlossenen Rollstabketten im Umlauf geführt werden, und zwar über eine obere Stangenumlaufeinrichtung und eine untere Stangenumlaufeinrichtung, wobei die Stangenumlaufeinrichtungen wieder Umlenkräder und jeweils zumindest ein Antriebsrad sowie die Laschenketten aufweisen, so dass die Laschenketten folglich Bestandteile der Stangenumlaufeinrichtungen sind. Dazu können die Laschenketten gegebenenfalls mit Laufrollen ausgeführt sein, die an Führungsschienen der Stangenumlaufeinrichtungen geführt sind. Es werden jedoch auch Ketten ohne separate Laufrollen erfasst. Die Kettenlaschen weisen bevorzugt jeweils zwei paarweise angeordnete Langlöcher zur Lagerung von zwei Rollstangen in einem vorgegebenen Teilungsmaß auf. Die Rollstäbe sind mittels einer W-förmigen oder Ω-förmigen Zentrierfeder in Umlaufrichtung anschlagfrei vorzentriert. Dazu weisen die sich gegenüberliegenden Kettenlaschen Verbindungsstege auf, auf denen die Zentrierfedern aufgesetzt sind, die mit ihren Enden die Lagerbolzen der betreffenden Rollstäbe umfassen.

Eine Rollstabkette bzw. Laschenkette der eingangs beschriebenen Art ist z. B. aus der DE 200 12 659 U1 bekannt. Weitere Ausführungsformen von Rollstabketten werden in der DE 34 32 549 C2, der DE 43 15 122 A1 , der US 4 613 293A, der DE 34 32 548 A1 und der DE 103 37 591 A1 beschrieben.

Eine kontinuierliche Presse der eingangs beschriebenen Art wird bevorzugt für die Herstellung von Holzwerkstoffplatten eingesetzt. Holzwerkstoffplatten meint insbesondere Faserplatten, Faserplatten oder OSB-Platten. Außerdem soll eine solche Presse für die Herstellung von Verbundplatten oder Verbundbauteilen einsetzbar sein. Verbundplatten oder Verbundbauteile meint insbesondere solche aus einem Faserverbundwerkstoff, z. B. SMC (Sheet Moulding Compound) oder aus Organoblechen. Das jeweilige Pressgut wird im Pressspalt zwischen den umlaufenden Stahlbändern unter Anwendung von Druck und Wärme verpresst.

Die Kettenbolzen der beschriebenen Laschenketten werden in der Praxis mit einem flüssigen Schmiermittel geschmiert bzw. geölt. Diese Maßnahmen haben sich in der Praxis grundsätzlich bewährt, der Einsatz solcher Schmiermittel ist jedoch mit entsprechenden Betriebsmittelkosten verbunden. Außerdem ist der Einsatzbereich der Schmiermittel hinsichtlich der Temperatur begrenzt. - Hier setzt die Erfindung ein.

Der Erfindung liegt die Aufgabe zugrunde, eine Rollstabkette für eine kontinuierliche Presse der eingangs beschriebenen Art zu schaffen, welche einen besonders wirtschaftlichen Betrieb einer kontinuierlich arbeitenden Presse ermöglicht und auch für Anwendungen bei höheren Temperaturen geeignet ist.

Zur Lösung dieser Aufgabe lehrt die Erfindung bei einer gattungsgemäßen Rollstabkette der eingangs beschriebenen Art, dass die Kettenbolzen zumindest bereichsweise mit einer selbstschmierenden (trocken schmierenden) Beschichtung versehen sind. Bei einer solchen selbstschmierenden Beschichtung kann es sich insbesondere um eine Beschichtung auf Basis von Kohlenstoff handeln, die z. B. als Beschichtung aus Wolframcarbid ausgebildet ist. Alternativ kommt auch eine Beschichtung aus Molybdänsulfid zum Einsatz.

Die Erfindung geht dabei von der Erkenntnis aus, dass sich auf den Einsatz flüssiger oder fließfähiger Schmiermittel im Bereich der Rollstabkette bzw. Laschenkette einer kontinuierlich arbeitenden Presse vollständig verzichten lässt, wenn die Kettenbolzen selbstschmierend mit einer Beschichtung versehen sind und damit durch eine inhärente Schmierung auszeichnen. Solche Beschichtungen, z. B. Wolframcarbid-Beschichtungen oder Molybdänsulfid-Beschichtungen, sind grundsätzlich bekannt. Sie zeichnen sich durch sehr niedrige Reibwerte sowie geringe Adhäsionsneigungen bei gutem Verschleißwiderstand aus. Schichtsysteme auf Wolframcarbidbasis mit lamellaren trocken schmierenden grafitischen Einlagerungen haben sich z. B. bei Komponenten der Automobilindustrie und im Bereich von Zahnrädern etabliert.

In der DE 10 2005 009 298 B4 wurde zwar bereits vorgeschlagen, im Bereich der Gelenklager von Zylinderkolbenanordnungen in einer kontinuierlichen Presse Beschichtungen auf Kohlenstoffbasis, z. B. WCH-Beschichtungen vorzugsehen. Demgegenüber kommt es im Rahmen der vorliegenden Erfindung jedoch auf die Optimierung der Laschenkette einer solchen kontinuierlichen Presse an, die besonders hohen Belastungen und gegebenenfalls Temperaturen innerhalb des kontinuierlichen Durchlaufs unterliegen. Durch den Einsatz der erfindungsgemäßen selbstschmierenden Beschichtung kann zunächst einmal auf den Einsatz üblicher fließfähiger Schmiermittel verzichtet (oder zumindest reduziert) werden, so dass ein besonders wirtschaftlicher Betrieb der kontinuierlichen Presse ermöglicht wird.

Ein weiterer Vorteil der erfindungsgemäßen Lösung ist die Tatsache, dass eine selbstschmierende Beschichtung sehr temperaturbeständig ist, so dass die Presse auch bei höheren Temperaturen betrieben werden kann. Die erfindungsgemäßen Rollstäbe lassen sich folglich nicht nur bei Pressen für die Herstellung von Holzwerkstoffplatten einsetzen, die üblicherweise mit Heizplattentemperaturen um etwa 200 °C betrieben werden, sondern besonders alternativ kommen die erfindungsgemäßen Rollstabketten bei kontinuierlichen Pressen für die Herstellung von Verbundbauteilen zum Einsatz, die bei höheren Temperaturen verpresst werden. Dabei kann es sich z. B. um Faserverbundwerkstoff und besonders bevorzugt SMC-Werkstoffe (Sheet Moulding Compound) handeln.

Aber auch im Zuge der Herstellung von Holzwerkstoffplatten (z. B. Spanplatten, Faserplatten oder OSB-Platten) lassen sich erhebliche Vorteile mit den erfindungsgemäßen Ketten erzielen. Durch einen deutlich verringerten oder auch gar keinen Schmiermittel- bzw. Ölverbrauch wird eine erhebliche Kostensenkung erzielt. Im Übrigen besteht auch bei Holzwerkstoffplatten die Möglichkeit, die Betriebstemperatur der Pressenplatten/Heizplatten zu erhöhen, so dass das Pressgut bei höheren Temperaturen verpresst wird und damit lässt sich der Heizzeitfaktor verringern. Dieses führt wiederum bei gleicher Pressenlänge zu höherem Ausstoß und damit höherer Wirtschaftlichkeit. So lassen sich z. B. Holzwerkstoffplatten mit Heizplattentemperaturen von mehr als 230 °C, vorzugsweise mehr als 250 °C, verpressen.

Die erfindungsgemäße selbstschmierende Beschichtung wird im Rahmen der Erfindung vorzugsweise durch Abscheidung aus der Dampfphase oder aus der Plasmaphase aufgebracht. Folglich wird zur Beschichtung z. B. ein plasmagestütztes physikalisches Gasabscheidungsverfahren (Plasma PVD) verwendet (Physical Vapor Deposition). Es handelt sich dabei um ein VakuumBeschichtungsverfahren, bei dem die Ausgangsmaterialien durch Eintrag thermischer oder kinetischer Energie aus der festen Phase in die Gasphase überführt bzw. ionisiert werden. Die Beschichtung wird dabei interkristallin in die Oberfläche der Lagerbolzen der Rollstabkette eingebracht, wobei die Lagerbolzen bevorzugt aus Stahl gefertigt sind.

Bevorzugt sind die Umfangsflächen der Kettenbolzen über die gesamte Länge und den gesamten Umfang mit der Beschichtung versehen. Außerdem können eine oder auch beide Stirnflächen der Kettenbolzen zumindest bereichsweise mit einer selbstschmierenden Beschichtung der beschriebenen Art versehen sein.

Im Übrigen können zusätzlich auch die Oberflächen der Rollstäbe mit einer selbstschmierenden Beschichtung der beschriebenen Art versehen sein. Dabei kann der Zylindermantel der Rollstäbe über die gesamte Länge und den gesamten Umfang des Rollstabes mit einer Beschichtung versehen sein. Außerdem können optional die Stirnflächen der Rollstäbe zumindest bereichsweise mit einer Beschichtung versehen sein.

Gegenstand der Erfindung ist auch eine Rollstabkette für eine kontinuierlich arbeitende Presse, und zwar bevorzugt mit den beschriebenen beschichteten Lagerbolzen. Die Rollstabkette, die auch selbstständig unter Schutz gestellt wird, weist als Kettenlaschen Innenlaschen und Außenlaschen auf, wobei die Innenlaschen mit Lagerhülsen verbunden sind und wobei die Außenlaschen mit Kettenbolzen verbunden sind, welche die Lagerhülsen durchgreifen. Die Kettenbolzen sind drehfest in kreisförmigen Ausnehmungen der Außenlaschen eingesetzt, z. B. eingepresst, wobei die Lagerhülsen drehfest in Ausnehmungen der Innenlaschen eingesetzt sind. Erfindungsgemäß ist vorgesehen, dass die Lagerhülsen einen kreisförmigen Querschnitt aufweisen und drehfest in die Ausnehmungen der Innenlaschen eingepresst sind. Die Enden der Lagerhülsen, die in die Ausnehmungen der Innenlaschen eingepresst werden, können dabei einen durchmesserreduzierten, umlaufenden Bund aufweisen. Im Bereich der Lagerhülsen bzw. deren Enden und den entsprechenden Ausnehmungen der Innenlaschen kann folglich erfindungsgemäß auf Schlüsselflächen bzw. Abflachungen oder Kanten verzichtet werden und eine drehfeste Befestigung wird durch entsprechende Anpassung der Dimensionen durch Einpressen der Lagerhülsen mit kreisförmigem Querschnitt (bzw. der durchmesserreduzierten Endabschnitte) in korrespondierende Ausnehmungen mit ebenfalls kreisförmigem Querschnitt erreicht. Eine solche Ausgestaltung zeichnet sich durch besonders hohe Stabilität aus. Im Rahmen der Erfindung sind die Kettenbolzen folglich drehbar in den korrespondierenden Lagerhülsen gelagert und in besonders bevorzugter Ausführungsform sind die Oberflächen der Kettenbolzen in der beschriebenen Weise selbstschmierend beschichtet. Die erfindungsgemäße Rollstabkette wird jedoch auch unabhängig von der Beschichtung der Kettenbolzen selbstständig unter Schutz gestellt.

Die beschriebenen selbstschmierenden Beschichtungen können eine Schichtdicke von 1µm bis 15 µm aufweisen.

In bevorzugter Weiterbildung ist vorgesehen, dass zwischen den Außenlaschen und den Innenlaschen jeweils Verbindungsstege angeordnet sind, an denen Zentrierfedern befestigt sind, die mit endseitigen Federschenkeln an die Lagerbolzen der Rollstäbe angeschlossen sind. Diese Federstege sind bevorzugt unter Verzicht auf Schweißverbindungen in Ausnehmungen der Außenlaschen bzw. Innenlaschen eingepresst. Weitere optionale Ausgestaltungen und Vorteile werden in der Figurenbeschreibung erläutert.

Gegenstand der Erfindung ist auch eine kontinuierliche Presse mit einer oberen beheizbaren Pressenplatte und einer unteren beheizbaren Pressenplatte und mit endlos umlaufenden Pressbändern, die unter Zwischenschaltung von Rollstäben an den Pressenplatten abgestützt sind, wobei die Rollstäbe beidseitig an Rollstabketten der beschriebenen Art geführt sind. Die kontinuierliche Presse wird folglich auch in Kombination mit der beschriebenen Rollstabkette unter Schutz gestellt.

Im Folgenden wird die Erfindung anhand einer lediglich ein Ausführungsbeispiel darstellenden Zeichnung näher erläutert. Es zeigen
- Fig. 1: eine kontinuierlich arbeitende Presse in einer vereinfachten Darstellung,

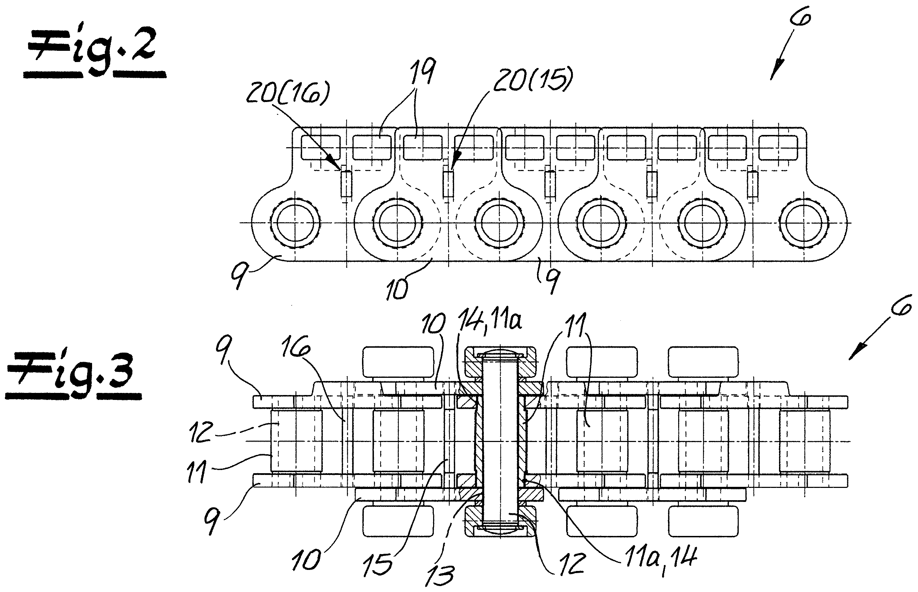

- Fig. 2: eine Rollstabkette für die Presse nach Fig. 1 in einer vereinfachten Seitenansicht,
- Fig. 3: die Kette nach Fig. 2 in einer Draufsicht bzw. im Schnitt,

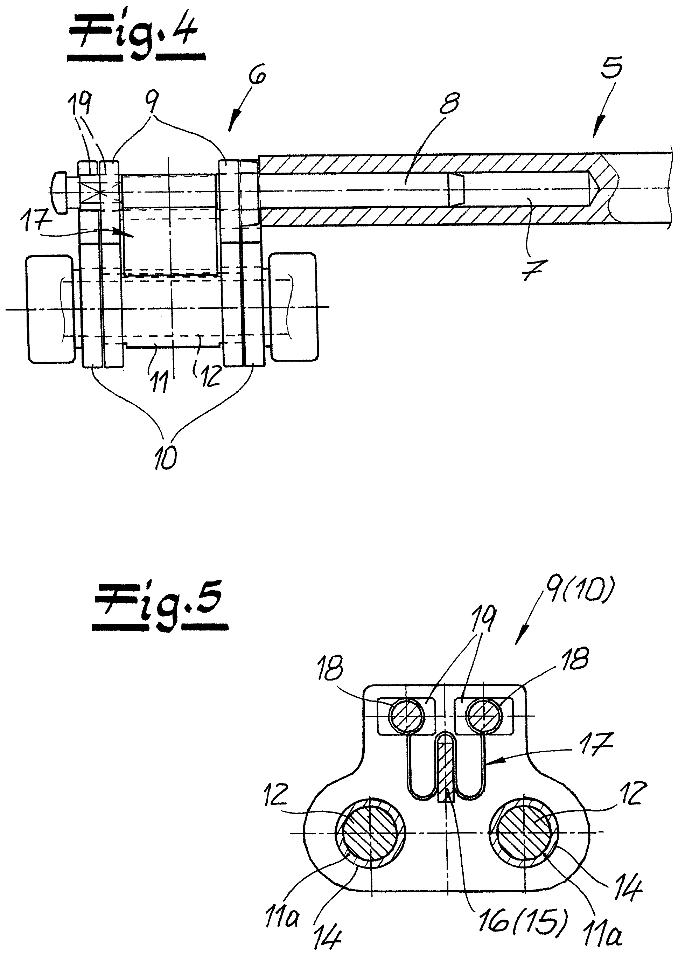

- Fig. 4: die Kette nach Fig. 2 mit einem daran geführten Rollstab,
- Fig. 5: einen Schnitt durch den Gegenstand nach Fig. 4 und

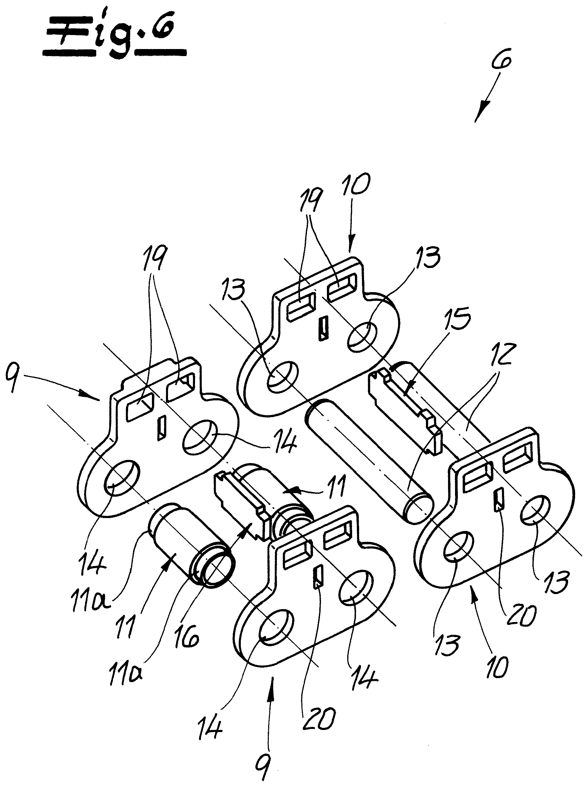

- Fig. 6: einen Ausschnitt aus der Kette nach Fig. 2 in einer Explosionsdarstellung.

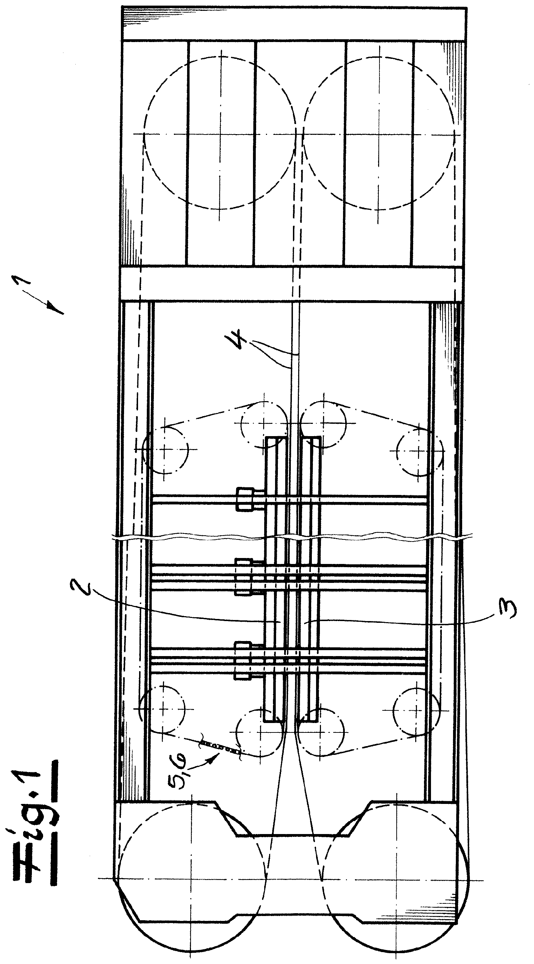

In Fig. 1 ist eine kontinuierlich arbeitende Presse dargestellt, die insbesondere der Herstellung von Holzwerkstoffplatten, z. B. Spanplatten oder Faserplatten, dient. In einer solchen Presse werden Pressgutmatten unter Anwendung von Druck und Wärme zu Pressgutplatten (z. B. Holzwerkstoffplatten) verpresst. Die Presse 1 weist in ihrem grundsätzlichen Aufbau ein Pressenoberteil mit oberer beheizbarer Pressenplatte 2 und ein Pressenunterteil mit unterer beheizbarer Pressenplatte 3 auf. Die Pressenplatten 2, 3 werden auch als Heizplatten bezeichnet. Im Pressenoberteil sowie im Pressenunterteil sind endlos umlaufende Pressbänder 4 (z. B. aus Stahl) unter Bildung eines Pressspaltes geführt, wobei sich die Pressbänder 4 unter Zwischenschaltung von Rollstangen bzw. Rollstäben 5 gegen die Pressenplatten 2, 3 abstützen. Die Rollstäbe 5 sind an endlos umlaufenden Rollstabketten geführt, die als Laschenketten 6 ausgebildet sind. Dazu weisen die Rollstäbe 6 endseitig Lagerbohrungen 7 auf, in die Rollstablagerbolzen 8 eingesetzt sind. Über diese Rollstablagerbolzen 8 werden die Rollstäbe 5 an den Rollstabketten 6 bzw. Laschenketten 6 geführt. Im Pressenoberteil ist eine obere Laschenkette 6 vorgesehen und im Pressenunterteil ist eine untere Laschenkette 6 geführt, die über entsprechende obere und untere Kettenumlaufeinrichtungen geführt sind, die entsprechende Umlenkräder und zumindest ein Antriebsrad aufweisen. Einzelheiten sind nicht dargestellt.

Die Rollstabkette 6 weist einerseits Innenlaschen 9 und andererseits Außenlaschen 10 auf. Die Innenlaschen 9 sind über (zylindrische) Lagerhülsen 11 miteinander verbunden. Die Außenlaschen 10 sind über Kettenbolzen 12 miteinander verbunden, wobei diese Kettenbolzen 12 die Lagerhülsen 11 durchgreifen und drehbar in den Lagerhülsen gelagert sind. Die Kettenbolzen 12 sind dabei drehfest in kreisförmigen Ausnehmungen 13 der Außenlaschen eingesetzt, z. B. eingepresst. Die Lagerhülsen 11 sind ebenfalls drehfest in Ausnehmungen 14 der Innenlaschen 9 eingesetzt. Erfindungsgemäß weisen die Lagerhülsen 11 bzw. deren (durchmesserreduzierte) Endabschnitte 11a einen kreisförmigen Querschnitt auf und sie sind drehfest in die Ausnehmungen 14 der Innenlaschen 9 eingepresst. Bei den Ausnehmungen 14 der Innenlaschen 9 handelt es sich bevorzugt um gespindelte Ausnehmungen bzw. gespindelte Bohrungen, die mit hoher Genauigkeit hergestellt werden können, so dass eine drehfeste Einpressung der Lagerhülsen möglich ist.

Außerdem sind zwischen den Außenlaschen 10 Verbindungsstege 15 vorgesehen und zwischen den Innenlaschen 9 sind Verbindungsstege 16 vorgesehen, die auch als Federträger eingerichtet sind, denn an diesen Verbindungsstegen 15, 16 sind jeweils Zentrierfedern 17 gehalten, wobei diese Zentrierfedern 17 endseitige Federschenkel 18 aufweisen, welche an die Lagerbolzen 8 der Rollstäbe 5 angeschlossen sind. Denn die Außenlaschen und die Innenlaschen weisen jeweils zwei Langlöcher 19, z. B. rechteckförmige Langlöcher auf, in denen die Lagerbolzen 7 der Rollstäbe 5 mit vorgegebenem Ausgleichsspiel gelagert sind. Über die im Querschnitt W-förmige oder Ω-förmige Feder 18 erfolgt eine Vorzentrierung der Rollstäbe an den Ketten.

Die Verbindungsstege 15, 16 sind unter Verzicht auf Schweißverbindungen in die Ausnehmungen 20 der Außenlaschen mit Innenlaschen eingepresst.

Die Kettenbolzen 12 und/oder die Rollstangen 5 können mit einer selbstschmierenden Beschichtung, z. B. aus Wolframcarbid oder Molybdänsulfid ausgebildet sein. Einzelheiten dazu sind in den Figuren nicht dargestellt. Die Beschichtung kann eine Schichtdicke von 1µm bis 15 µm aufweisen.

## Patentansprüche

1. Rollstabkette für eine kontinuierliche Presse (1), insbesondere zur Herstellung von Holzwerkstoffplatten, Verbundplatten oder Verbundbauteilen,
wobei die Rollstabkette als Laschenkette (6) ausgebildet ist, an der Rollstäbe (5) mittels Rollstablagerbolzen (7) befestigbar sind,
wobei die Laschenkette (6) mittels Kettenbolzen (12) verbundene Kettenlaschen (9, 10) aufweist,
wobei die Kettenlaschen (9, 10) in Kettenumlaufrichtung verlaufende Langlöcher (18) aufweisen, in welchen die Rollstablagerbolzen (7) einsteckbar sind,
**dadurch gekennzeichnet, dass** die Kettenbolzen (12) zumindest bereichsweise mit einer selbstschmierenden Beschichtung versehen sind,
wobei die selbstschmierende Beschichtung entweder auf Basis von Kohlenstoff hergestellt und als Beschichtung auf Wolframcarbidbasis ausgebildet ist oder wobei die Beschichtung aus Molybdänsulfid ausgebildet ist.

2. Rollstabkette nach Anspruch 1, **dadurch gekennzeichnet, dass** die Umfangsflächen der Kettenbolzen (12) über die gesamte Länge und den gesamten Umfang mit der Beschichtung versehen sind.

3. Rollstabkette nach Anspruch 1 oder 2, **dadurch gekennzeichnet, dass** eine oder beide Stirnflächen der Kettenbolzen (12) zumindest bereichsweise mit einer selbstschmierenden Beschichtung versehen sind.

4. Rollstabkette nach einem der Ansprüche 1 bis 3, **dadurch gekennzeichnet, dass** die Beschichtung durch Abscheidung aus der Dampfphase oder Plasmaphase aufgebracht ist.

5. Rollstabkette nach einem der Ansprüche 1 bis 4,
wobei als Kettenlaschen (9, 10) Innenlaschen (9) und Außenlaschen (10) vorgesehen sind,
wobei die Innenlaschen (9) mit Lagerhülsen (11) verbunden sind und wobei die Außenlaschen (10) mit Kettenbolzen (12) verbunden sind, welche die Lagerhülsen (11) durchgreifen,
wobei die Kettenbolzen (12) drehfest in z. B. kreisförmige Ausnehmungen (13) der Außenlaschen (10) eingesetzt, z. B. eingepresst sind,
wobei die Lagerhülsen (11) drehfest in Ausnehmungen (14) der Innenlaschen (9) eingesetzt sind,
**dadurch gekennzeichnet, dass** die Lagerhülsen (11) einen kreisförmigen Querschnitt aufweisen und drehfest in die Ausnehmungen (14) der Innenlaschen (9) eingepresst sind.

6. Rollstabkette nach Anspruch 5, wobei zwischen den Außenlaschen (10) und den Innenlaschen (9) jeweils Verbindungsstege (15, 16) angeordnet sind, an denen Zentrierfedern (17) befestigt sind, die mit endseitigen Federschenkeln (18) an Rollstablagerbolzen (7) der Rollstäbe (5) angeschlossen sind, **dadurch gekennzeichnet, dass** die Verbindungsstege (15, 16) unter Verzicht auf Schweißverbindungen in Ausnehmungen (20) der Außenlaschen bzw. der Innenlaschen eingepresst sind.

7. Rollstabkette nach Anspruch 6, **dadurch gekennzeichnet, dass** die Lagerhülsen (11) endseitig jeweils einen durchmesserreduzierten Bund (11a) aufweisen, welcher in die Ausnehmung (14) der Innenlaschen (9) eingepresst ist.

8. Kontinuierliche Presse, insbesondere für die Herstellung von Holzwerkstoffplatten, Verbundplatten oder Verbundbauteilen,
mit einer oberen beheizbaren Pressenplatte (2) und einer unteren beheizbaren Pressenplatte (3) mit endlos umlaufenden Pressbändern (4), die unter Zwischenschaltung von Rollstäben (5) an den Pressenplatten (2, 3) abgestützt sind, wobei die Rollstäbe (5) beidseitig an Rollstabketten (6) nach einem der Ansprüche 1 bis 7 geführt sind.

## Claims

1. A rollbar chain for a continuous press (1), particularly for producing wood based boards, composite boards or composite components,
wherein the rollbar chain is realized in the form of a plate-link chain (6), on which rollbars (5) can be fastened by means of rollbar bearing bolts (7), wherein the plate-link chain (6) has link plates (9, 10) that are connected by means of chain bolts (12), and
wherein the link plates (9, 10) have elongate holes (18), which extend in the chain circulating direction and into which the rollbar bearing bolts (7) can be inserted,
**characterized in that** the chain bolts (12) are at least sectionally provided with a self-lubricating coating,
wherein the self-lubricating coating is either produced on the basis of carbon and realized in the form of a coating on the basis of tungsten carbide or wherein the coating is formed of molybdenum sulfide.

2. The rollbar chain according to claim 1, **characterized in that** the circumferential surfaces of the chain bolts (12) are provided with the coating over the entire length and the entire circumference.

3. The rollbar chain according to claim 1 or 2, **characterized in that** one or both end faces of the chain bolts (12) are at least sectionally provided with a self-lubricating coating.

4. The rollbar chain according to one of claims 1 to 3, **characterized in that** the coating is applied by means of deposition from the vapor phase or plasma phase.

5. The rollbar chain according to one of claims 1 to 4,
wherein link plates (9, 10) in the form of inner plates (9) and outer plates (10) are provided, wherein the inner plates (9) are connected with bearing sleeves (11), and wherein the outer plates (10) are connected with chain bolts (12) extending through the bearing sleeves (11),
wherein the chain bolts (12) are inserted, e.g. pressed, into recesses (13) of the outer plates (10), e.g. circular recesses of the outer plates, in a rotationally fixed manner, and
wherein the bearing sleeves (11) are inserted into recesses (14) of the inner plates (9) in a rotationally fixed manner,
**characterized in that** the bearing sleeves (11) have a circular cross section and are pressed into the recesses (14) of the inner plates (9) in a rotationally fixed manner.

6. The rollbar chain according to claim 5, wherein connecting webs (15, 16) with centering springs (17) fastened thereon are respectively arranged between the outer plates (10) and the inner plates (9), and wherein said centering springs are connected to rollbar bearing bolts (7) of the rollbars (5) with spring legs (18) arranged on their ends, **characterized in that** the connecting webs (15, 16) are respectively pressed into recesses (20) of the outer plates and the inner plates without producing any welded connections.

7. The rollbar chain according to claim 6, **characterized in that** the bearing sleeves (11) respectively have on their ends a collar (11a) of reduced diameter, which is pressed into the recess (14) of the inner plates (9) .

8. A continuous press, particularly for producing wood based boards, composite boards or composite components,
with an upper heatable press plate (2) and a lower heatable press plate (3) and with endlessly revolving press belts (4), which are supported on the press plates (2, 3) with interposition of rollbars (5), wherein the rollbars (5) are on both sides guided on rollbar chains (6) according to one of claims 1 to 7.

## Revendications

1. Chaîne de barres rotatives, destinée à une presse (1), continue, dédiée notamment à la fabrication de panneaux en matière dérivée du bois, de panneaux en matière composite ou d'éléments en matière composite, la chaîne de barres rotatives étant conçue sous la forme d'une chaîne articulée (6), sur laquelle des barres articulées (5) sont susceptibles d'être fixées au moyen de pivots (7) de barre rotative,
la chaîne articulée (6) comportant des maillons (9, 10), assemblés au moyen de tourillons (12),
les maillons (9, 10) comportant des trous oblongs (18) s'écoulant dans le sens de circulation de la chaîne, dans laquelle les pivots (7) de barre rotative sont insérables,
**caractérisée en ce que** les tourillons (12) sont munis au moins par endroits d'un revêtement auto-lubrifiant, le revêtement auto-lubrifiant étant fabriqué soit sur base d'un carbone et étant conçu sous la forme d'un revêtement à base de tungstène ou le revêtement étant conçu en sulfure de molybdène.

2. Chaîne de barres rotatives selon la revendication 1, **caractérisée en ce que** les surfaces périphériques des tourillons (12) sont munies du revêtement sur toute leur longueur et sur toute leur périphérie.

3. Chaîne de barres rotatives selon la revendication 1 ou 2, **caractérisée en ce qu'**une ou les deux surfaces frontales des tourillons (12) sont munies au moins par endroits d'un revêtement auto-lubrifiant.

4. Chaîne de barres rotatives selon l'une quelconque des revendications 1 à 3, **caractérisée en ce que** le revêtement est appliqué par dépôt à partir de la phase vapeur ou de la phase plasma.

5. Chaîne de barres rotatives selon l'une quelconque des revendications 1 à 4,
en tant que maillons (9, 10) étant prévus des maillons internes (9) et des maillons externes (10),
les maillons internes (9) étant assemblés avec des coussinets de roulement (11) et les maillons externes (10) étant assemblés avec des tourillons (12), lesquels traversent les coussinets de roulement (11), les tourillons (12) étant insérés, par ex. pressés de manière solidaire en rotation dans par ex. des évidements (13) circulaires des maillons externes (10),
les coussinets de roulement (11) étant insérés de manière solidaire en rotation dans des évidements (14) des maillons internes (9),
**caractérisée en ce que** les coussinets de roulement (11) présentent une section transversale circulaire et sont pressés de manière solidaire en rotation dans les évidements (14) des maillons internes (9).

6. Chaîne de barres rotatives selon la revendication 5, entre les maillons externes (10) et les maillons internes (9) étant placées chaque fois des barrettes de liaison (15, 16), sur lesquelles sont fixés des ressorts de centrage (17), qui par des branches d'extrémité (18) de ressort se raccordent sur des pivots (7) de barre rotative des barres articulées (5), **caractérisée en ce que** les barrettes de liaison (15, 16) sont pressées sous exclusion de soudures dans des évidements (20) des maillons externes ou des maillons internes.

7. Chaîne de barres rotatives selon la revendication 6, **caractérisée en ce que** les coussinets de roulement (11) comportent sur leur côté extrémité chaque fois une collerette (11a) de diamètre réduit, laquelle est pressée dans l'évidement (14) des maillons internes (9) .

8. Presse continue, dédiée notamment à la fabrication de panneaux en matière dérivée du bois, de panneaux en matière composite ou d'éléments en matière composite, pourvue d'un plateau de pression (2) supérieur, susceptible d'être chauffé et d'un plateau de pression (3) inférieur, susceptible d'être chauffé et de bandes de pression (4) en circulation continue, qui sous interposition de barres articulées (5) s'appuient sur les plateaux de pression (2, 3), les barres articulées (5) étant guidées de part et d'autre sur des chaînes de barres rotatives (6) selon l'une quelconque des revendications 1 à 7.
